# EUROPÄISCHE PATENTSCHRIFT

(11) **EP 2 746 099 B1**
(45) Veröffentlichungstag und Bekanntmachung des Hinweises auf die Patenterteilung: **01.02.2017**
(21) Anmeldenummer: 13197100.4
(22) Anmeldetag: 13.12.2013
(51) Int. Cl.: B60N 2/48, B60N 2/50, B60N 2/02, B60N 2/06, B60N 2/14, B60N 2/44

(54) **Fahrzeugsitz, insbesondere für Nutzfahrzeuge, mit einem Sitzteil und einer Rückenlehne und gemeinsam nutzbaren Funktionen**
Vehicle seat, in particular for commercial vehicles, comprising a seat part and a backrest and shared functions
Siège de véhicule, notamment pour véhicules utilitaires, doté d'une partie d'assise et d'un dossier ainsi que de fonctions pouvant être utilisées conjointement

(30) Priorität: 18.12.2012 DE 102012112557
(43) Veröffentlichungstag der Anmeldung: 25.06.2014
(73) Patentinhaber: GRAMMER AG, 92224 Amberg (DE)
(72) Erfinder: Ott, Richard, 92245 Kümmersbruck (DE)
(74) Vertreter: Hannke, Christian

(56) Entgegenhaltungen:
- EP-A1- 2 293 959
- EP-A2- 1 824 358
- US-A- 6 079 786
- US-A1- 2010 001 169

## Beschreibung

Die Erfindung betrifft einen Fahrzeugsitz, insbesondere für Nutzfahrzeuge, mit einem Sitzteil, einer Rückenlehne und einem Unterteil, gegenüber welchem ein das Sitzteil und die Rückenlehne tragendes Oberteil federnd gelagert ist, wobei das Sitzteil gegenüber dem Oberteil mittels einer Dreheinrichtung um eine sich in Fahrzeugsitzhöhenrichtung erstreckende Drehachse für eine Drehbewegung drehbar gelagert ist und mittels einer Horizontalfedereinrichtung in mindestens eine senkrecht zur Drehachse verlaufende Richtung, vorzugsweise in Fahrzeugsitzquerrichtung, für eine Horizontalfederbewegung federnd gelagert ist, gemäß dem Oberbegriff des Patentanspruches 1.

Fahrzeugsitze mit Dreheinrichtungen sind ebenso bekannt, wie Fahrzeugsitze mit Horizontalfedereinrichtungen. Hierbei dienen Dreheinrichtungen, die häufig in oder an den Oberteil eines Fahrzeugsitzes angeordnet sind, dazu, den Fahrzeugsitz um seine Vertikalachse drehen zu können, um beispielsweise den Benutzer eines Traktors zu ermöglichen, dass dieser bei einer Drehstellung des Sitzes, die sich von der üblichen Fahrtrichtungssitzhaltung, die nach vorne ausgerichtet ist, unterscheidet, sich besser nach hinten wenden kann. Dies hat zur Folge, dass er die an dem Traktor angehängten und befestigten Geräte und den bearbeiteten Ackerboden besser beobachten kann. Auch können derartige Dreheinrichtungen dazu benutzt werden, dem Benutzer das Ein- und Aussteigen aus dem Fahrzeug zu erleichtern, da die Zugänge zu den Kabinen von Nutzfahrzeugen, insbesondere Traktoren oder Baufahrzeugen, an der Seite des Fahrzeuges beziehungsweise der Kabine angeordnet sind.

Auch sind Horizontalfedereinrichtungen für Fahrzeugsitze bekannt, die beispielsweise ebenso in dem Oberteil des Fahrzeugsitzes angeordnet seien können. Derartige Horizontalfedereinrichtungen können beispielsweise mindestens zwei Schienen, die sich in Fahrzeugsitzquerrichtung erstrecken, aufweisen, wobei diese Schienen übereinander liegende plattenartige Elemente verschiebbar zueinander lagern und mittels einer Federspannung bewirken, dass nach erfolgter federnder Auslenkung der Fahrzeugsitz wieder in seine Mittellage zurückgelangt. Derartige Federeinrichtungen für Horizontalfedereinrichtungen sind mit unterschiedlichen Härtegraden bekannt.
Auch ist bekannt, dass derartige Horizontalfedereinrichtungen verriegelbar sind, das heißt, dass der Fahrzeugsitz hinsichtlich der Fahrzeugsitzquerrichtung eine Mittellage einnimmt, also in Fahrzeuglängsrichtung beziehungsweise Fahrzeugsitzlängsrichtung ausgerichtet ist und bezüglich der Fahrzeugsitzquerrichtung in der Mitte positioniert ist.
Bei derartigen Einrichtungen hat sich, auch wenn sie federbeaufschlagt sind, um wieder eine ursprüngliche Position oder eine Mittelage einzunehmen, gezeigt, dass bei dem Übergang vom Befahren eines Ackers zu dem Befahren einer Straße oder vice versa zugleich eine Verriegelung oder Entriegelung einzelner Einrichtungen von Seiten des Fahrers gewünscht sind. Allerdings ist hierzu bisher eine Vielzahl von Betätigungselementen betätigt werden, um mehr als eine Einrichtung zu verriegeln/arretieren oder zu entriegeln. Häufig ist auch der Verriegelungs- und der Entriegelungszustand bei verschiedenen Einrichtungen, wie einer Dreheinrichtung und Horizontalfedereinrichtung, in Abhängigkeit von dem Gelände, welches momentan von dem Nutzfahrzeug befahren wird, unterschiedlich, das heißt, dass es Zustandssituationen gibt, bei denen die eine Einrichtung verriegelt vorliegen soll und die andere Einrichtung entriegelt vorliegen soll. Somit müssen auch in diesem Fall eine Vielzahl von Betätigungselementen gehandhabt werden, um den gewünschten Zustand des Fahrzeugsitzes herbeizuführen.

Aus der US20100001169 A1 ist ein Fahrzeugsitz mit den Merkmalen des Oberbegriffs vom Anspruch 1 bekannt.

Demzufolge ist es Aufgabe der Erfindung, einen Fahrzeugsitz, insbesondere für Nutzfahrzeuge, mit einem Sitzteil und einer Rückenlehne sowie einem Unterteil, gegenüber welchem ein das Sitzteil und die Rückenlehne tragendes Oberteil federnd gelagert ist, zur Verfügung zu stellen, bei dem eine Vielzahl von Funktionseinrichtungen, wie beispielsweise einer Dreheinrichtung zum Drehen des Fahrzeugsitzes und einer Horizontalfedereinrichtung zur Durchführung einer federnden Bewegung in Horizontalrichtung, in ihren Zuständen auf einfache Weise umschaltbar sind.

Diese Aufgabe wird gemäß den Merkmalen des Patentanspruches 1 gelöst.

Kerngedanke der Erfindung ist, dass bei einem Fahrzeugsitz, insbesondere für Nutzfahrzeuge, mit einem Sitzteil, einer Rückenlehne und einem Unterteil, gegenüber welchem ein das Sitzteil die Rückenlehne tragendes Oberteil federnd gelagert ist, wobei das Sitzteil gegenüber dem Oberteil mittels einer Dreheinrichtung um eine sich in Fahrzeugsitzhöhenrichtung erstreckende Drehachse für eine Drehbewegung drehbar gelagert ist und mittels einer Horizontalfedereinrichtung in mindestens eine senkrecht zur Drehachse verlaufende Richtung, vorzugsweise in Fahrzeugsitzquerrichtung, für eine Horizontalfederbewegung federnd gelagert ist, mittels einem gemeinsamen Schaltelement sowohl die Dreheinrichtung als auch die Horizontalfedereinrichtung hinsichtlich der mit ihnen durchgeführten Bewegungen zeitglich verriegelbar oder entriegelbar ist.

Durch das zur Verfügung stellen eines einzigen Schaltelementes für die zeitgleiche Herbeiführung von Zuständen mehrerer Funktionseinrichtungen des Fahrzeugsitzes kann eine einfache Bedienung des Fahrzeugsitzes bei dem Übergang von dem Ackerboden zu der Straße oder dem Feldweg als befahrender Untergrund oder vice versa zur Verfügung gestellt werden. Beispielsweise wird bei dem Befahren eines Ackerboden zur Bewirtschaftung desjenigen häufig die Entriegelung der Dreheinrichtung gewünscht, also eine - gegebenenfalls federbeaufschlagte - Drehbewegung des Fahrzeugsitzes, beispielsweise um +/- 30 Grad gegenüber der Fahrzeuglängsrichtung, angestrebt, um das Beobachten des rückwärtigen Bereiches des Traktors, der die bewirtschaftete Fläche des Ackerbodens wiedergibt, zu ermöglichen. Zum einen ergibt sich aus einer derartigen möglichen Drehbewegung des Fahrzeugsitzes die notwendige Bewegungsfreiheit und zum anderen ein erleichtertes rückwärtiges Beobachten.

Ebenso wird beim Überfahren des Ackerbodens ein entriegelter Zustand der Horizontalfedereinrichtung gewünscht, da auf dem unruhigen Untergrund, wie er bei einem Ackerboden vorliegt, ein hoher Schwingungskomfort, auch in Seiten- beziehungsweise Horizontalrichtung, auch erwünscht ist.

Demgegenüber wird bei dem Befahren einer Straße, beispielsweise nach erfolgter Bewirtschaftung einer Ackerfläche, ein Verriegelungszustand der Dreheinrichtung schon allein deswegen gewünscht, weil hierdurch eine Erhöhung der Fahrsicherheit ermöglicht wird. Denn der Fahrer kann - wenn eine Drehbewegung des Fahrzeugsitzes verhindert wird - zuverlässig die Bremspedale und das Lenkrad zum Lenken des Fahrzeuges aufgrund seiner fixierten Ausrichtung in Fahrtrichtung erreichen.

Ebenso ist bei Befahren einer Straße ein verriegelter Zustand der Horizontalfedereinrichtung an der Position ihrer Mittellage bezüglich der Fahrzeugsitzbreitenrichtung gewünscht. Auch hier wird eine Fahrsicherheit des Fahrers und des Fahrzeuges durch ein besseres und zuverlässigeres Erreichen der Bremspedale und des Lenkrades erreicht.

Somit gibt der verriegelte Zustand des Fahrzeugsitzes bezüglich der Dreheinrichtung eine Ausrichtung des Fahrers in Fahrtrichtung wieder. Ein verriegelter Zustand der Horizontalfedereinrichtung bewirkt eine Positionierung des Fahrzeugsitzes in seiner Fahrzeugsitzbreitenrichtung in eine Mittellage und eine Fixierung in dieser Mittellage.

Das Schaltelement ist zusätzlich dazu in der Lage, eine Umklappeinrichtung für das Durchführen einer Umklappbewegung eines oberen Teils der Rückenlehne zeitgleich mit der Dreheinrichtung und der Horizontalfedereinrichtung verriegelt oder entriegelt zu schalten. Hierbei handelt es sich um einen oberen Abschnitt der Rückenlehne, der gerne nach hinten, also auch zur Rückseite der Rückenlehne hin, umgeklappt wird, um ein sich Umdrehen des Fahrers bei Bewirtschaftung des Ackerbodens zu erleichtern.

Somit stellt ein verriegelter Zustand der Umklappeinrichtung einen Zustand dar, bei dem in Längsrichtung der Rückenlehne das obere Teil der Rückenlehne ausgerichtet ist und in diesem Zustand auch aufgerichtet ist. Dieser verriegelte Zustand soll bei Befahren einer Straße eingenommen werden, um einen hohen Komfort, auch im Schulter- und Kopfbereich, und eine Unterstützung des Schulterbereiches hier zu ermöglichen. Demgegenüber soll der obere Teil der Rückenlehne, bei dem es sich auch um eine Kopfstütze handeln kann, beim Befahren des Ackerbodens umgeklappt sein, um die notwendige Bewegungsfreiheit des Fahrers, auch zum rückwärtigen Beobachten, zu ermöglichen.

Mit dem Schaltelement ist zusätzlich eine Vertikalfedereinrichtung für das Durchführen einer Vertikalfederbewegung des Oberteils gegenüber dem Unterteil zeitgleich mit der Verriegelung/Entriegelung der Dreheinrichtung und der Horizontalfedereinrichtung umschaltbar. Eine derartige Vertikalfedereinrichtung, wie sie häufig über einen Dämpfer und/oder eine Luftfeder zur Verfügung gestellt wird, kann in ihrer Dämpfungskraft derart eingestellt werden, dass bei einem verriegelten Zustand der Dreheinrichtung und der Horizontalfedereinrichtung zugleich ein erster Vertikalfederungszustand mit einer weichen Federung eingenommen wird und bei einem entriegelten Zustand der Dreheinrichtung und der Horizontalfedereinrichtung zugleich ein zweiter Vertikalfederungszustand mit einer harten Federung der Vertikalfedereinrichtung eingenommen wird. Dämpfer, die eine Umschaltung von einer weichen auf eine harte Federung zulassen, sind hinreichend aus dem Fahrzeugsitzbereich bekannt.

Demzufolge ist eine weiche Federung beziehungsweise eine weiche Einstellung dieser Vertikalfedereinrichtung bei Befahren einer Straße erwünscht, um den hohen Schwingungskomfort zu ermöglichen. Demgegenüber wird beim Befahren eines Ackerbodens, also im Off-road-Bereich, eine harte Federung häufig deswegen gewünscht, da hierdurch ein unnötiges Erreichen von Endanschlägen des Dämpfers und/oder der Luftfeder vermieden wird.

Somit ist durch die Betätigung von lediglich einem Schaltelement eine Erhöhung des Bedienkomforts bei einem Übergang von einem Off-road-Befahren zu einem Straßen-Befahren möglich. Dies kann auch anders herum ermöglicht werden. Denn eine einzige Betätigung eines Schaltelementes verändert zeitgleich und sofort mehrere Zustände des Fahrzeugsitzes und somit mehrerer verschiedene Sitzeinstellungen. Dies hat zur Folge, dass ausreichend Zeit für den eigentlichen Bewirtschaftungsvorgang für den Ackerboden zur Verfügung steht.

Außerdem muss der Fahrer nicht unnötig Aufmerksamkeit und Zeit für das Einstellen des Fahrzeugsitzes beim Übergang von der Straße zum Off-road-Bereich und anders herum zur Verfügung stellen.

Es können auch durch die Betätigung dieses einzigen Schalters bereits vorprogrammierte Sitzeinstellungen wiederhergestellt werden, die zuvor, beispielsweise mittels Programmierung, von dem Fahrer eingestellt worden sind. Hierdurch kann eine Wiederherstellung einer optimalen Sitzfunktionseinstellung erreicht werden. Weiterhin ist eine hohe Bewegungsfreiheit ermöglicht, da im entriegelten Zustand viele Freiheitsgrade des Fahrzeugsitzes vorliegen können. Zugleich wird jedoch die Fahrsicherheit des Fahrers innerhalb des Nutzfahrzeuges, wie ein Traktor, auf der Straße sichergestellt.

Sämtliche Einrichtungen für Bewegungen des Fahrzeugsitzes können sowohl mechanisch, wie beispielsweise mittels eines Seilzuges, als auch elektrisch, elektromagnetisch oder pneumatisch mit dem gemeinsamen Schaltelement verbunden sein und auch betätigt werden.

Zusätzlich kann mittels des Schaltelementes eine Sitzteilseitenstützeinrichtung für das Durchführen einer Auf- und Abwärtsbewegung von an dem Sitzteil seitlich angeordneten ersten Seitenstützelementen zeitgleich mit der Verriegelung/Entriegelung der Dreheinrichtung und der Horizontalfedereinrichtung verriegelbar oder entriegelbar sein. Hierbei ist die Sitzteilseitenstützeinrichtung bei einem verriegelten Zustand der Dreheinrichtung und der Horizontalfedereinrichtung in einem Zustand mit aufwärtsgerichteten oder abwärtsgerichteten ersten Seitenstützelementen und bei einem entriegelten Zustand der Dreheinrichtung und der Horizontalfedereinrichtung in einem Zustand der abwärts- oder aufwärtsgerichteten ersten Seitenstützelemente. Dies bedeutet, dass die Seitenstützelemente, die seitlich an dem Sitzteil innerhalb eines Polsters angebracht sein können, aufgestellt werden können oder nach unten gefahren können, je nachdem ob bei Befahren der Straße eine hohe Fahrsicherheit (aufgestellter Zustand) oder hohe Bewegungsfreiheit (runtergefahrener Zustand) gewünscht ist.

Dies trifft auch auf den Off-road-Bereich, also das Befahren des Ackerbodens zu. Denn die Seitenstützelemente in dem Sitzteil können nach unten gefahren sein, um eine hohe Bewegungsfreiheit dem Fahrer, der sich auch nach hinten wenden möchte, zu ermöglichen. Alternativ kann absichtlich vorgesehen sein, dass die Seitenstützelemente nach oben gefahren sind, um eine seitliche Stütze des Fahrers in dem Gelände, in dem der Traktor hin und her schwenkt, gegeben zu haben.

Zudem kann mittels des Schaltelements zusätzlich eine Rückenlehnenseitenstützeinrichtung für das Durchführen einer Personenkörperanpassungsbewegung von an der Rückenlehne seitlich angeordneten zweiten Seitenstützelementen zeitgleich mit der Verriegelung/Entriegelung
der Dreheinrichtung und der Horizontalfedereinrichtung verriegelbar oder entriegelbar sein. Dies bedeutet, dass die Rückenlehnenseitenstützeinrichtung bei einem verriegelten Zustand der Dreheinrichtung und der Horizontalfedereinrichtung in einem Zustand mit abwärtsgerichteten zweiten Seitenstützelementen und bei einem entriegelten Zustand der Dreheinrichtung und der Horizontalfedereinrichtung in einem Zustand mit aufwärtsgerichteten zweiten Seitenstützelementen vorliegt.

Somit wünscht man beim Befahren der Straße die notwendige Bewegungsfreiheit im Rückenlehnenbereich. Bei Befahren des Ackerbodens (Off-road) hingegen möchte man eine Veränderung dieser zweiten Seitenstützelemente zum Körper des Fahrers hin derart, dass eine Körperanpassung der Rückenlehne erfolgt und somit eine seitliche Stützung des Fahrers im Gelände stattfindet, haben.

Gemäß einer bevorzugten Ausführungsform kann mittels einer Steuereinrichtung ab einer vorbestimmbaren Geschwindigkeit des Fahrzeuges eine Anzeigeeinrichtung ansteuerbar sein, mittels welcher ein Hinweis auf eine fällige Betätigung des Schaltelementes anzeigbar ist. Dies kann beispielsweise bei einer Geschwindigkeit von 20km/h als Warnsignal erfolgen oder als Hinweis auf einem Display am Armaturenbrett des Traktors, wie beispielsweise das Anzeigen eines roten Sicherheitshebels oder dergleichen.

Weitere vorteilhafte Ausführungsformen ergeben sich aus den Unteransprüchen.

Vorteils- und Zweckmäßigkeit sind der nachfolgenden Beschreibung in Verbindung mit den Zeichnungen zu entnehmen. Hierbei zeigen:
- Fig. 1:: eine perspektivische schematische Darstellung eines Fahrzeugsitzes gemäß der vorliegenden Erfindung mit lediglich schematisch dargestellten Zuständen der Sitzverstelleinrichtungen, wie beispielsweise einer Dreheinrichtung oder einer Horizontalfedereinrichtung;
- Fig. 1a:: den in Figur 1 dargestellten Fahrzeugsitz in einem ersten Zustand, in dem das Nutzfahrzeug eine Straße befährt;
- Fig. 1b:: den in Figur 1 dargestellten Fahrzeugsitz in einem zweiten Zustand, in dem das Nutzfahrzeug einen Ackerboden befährt;
- Fig. 2:: in einer perspektivischen Darstellung den in Fig. 1, 1 a und 1 b dargestellten Fahrzeugsitz mit vergrößerten Sitzausschnittsdarstellungen, die schematisch in verschiedene Zustände der Sitzeinstellungseinrichtungen zeigen;
- Fig. 3a und 3b:: einen Fahrzeugsitz in perspektivischer Darstellung gemäß der vorliegenden Erfindung, in vollständiger und aufgeschnittener Form, der detaillierter die einzelnen Elemente der Sitzverstelleinrichtungen zeigt.

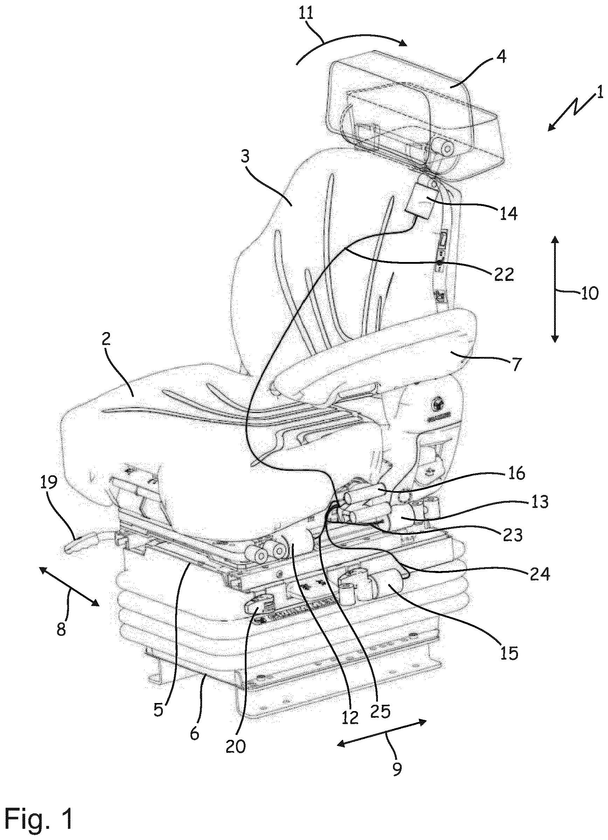

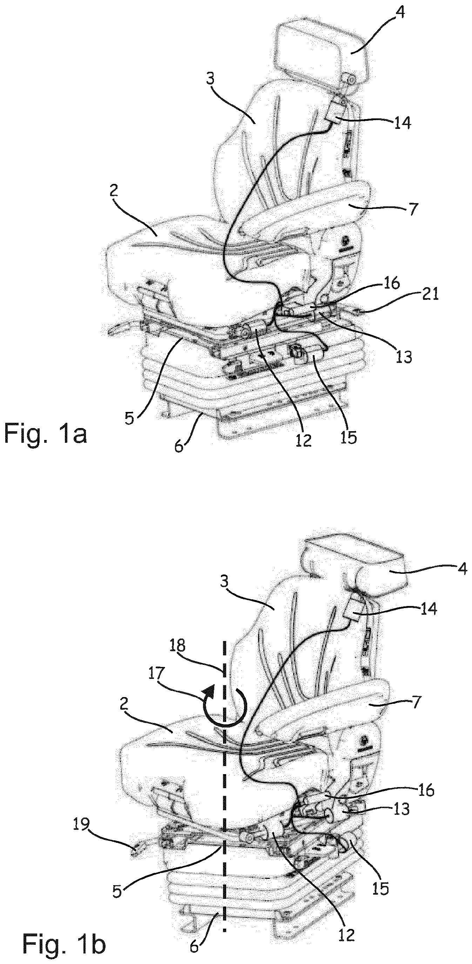

Fig.1 wird in einer perspektivischen Darstellung ein Fahrzeugsitz gemäß der vorliegenden Erfindung mit schematisch dargestellten Zuständen der einzelnen Sitzeinstelleinrichtungen gezeigt. Bei den Sitzeinstelleinrichtungen handelt es sich beispielsweise um eine Dreheinrichtung zum Verdrehen des Fahrzeugsitzes gegenüber einer im Wesentlichen vertikal verlaufenden Drehachse, um eine Horizontalfedereinrichtung zum federnden horizontalen Bewegen des Fahrzeugsitzes, vorzugsweise in Sitzbreitenrichtung, aber auch in eine Sitzlängsrichtung, eine Vertikalfederungseinrichtung, die ein Oberteil gegenüber ein Unterteil des Fahrzeugsitzes federnd lagert, eine Rückenlehnenumklappeinrichtung, die ein oberes Teil der Rückenlehne umklappen lässt, um so die Bewegungsfreiheit des Fahrers zu erhöhen, eine Sitzteilseitenstützeinrichtung zum Aus- und Einfahren von seitlich angeordneten ersten Seitenstützelementen auf dem Sitzteil und eine Rückenlehnenseitenstützeinrichtung zum Ein- und Ausfahren von seitlich angebrachten zweiten Seitenstützelementen an der Rückenlehne.

Ein Fahrzeugsitz 1 umfasst ein Sitzteil 2 und eine Rückenlehne 3 sowie ein oberes Teil 4 der Rückenlehne 3, welches auch als Kopfstütze ausgebildet sein kann und gemäß einer Bewegung, so wie sie durch den Pfeil 11 angedeutet wird, nach hinten geklappt werden kann.

Ein Oberteil 5, auf welchem das Sitzteil 2 angeordnet ist, ist gegenüber einem Unterteil 6, welches zumeist mit dem Karosserieboden oder dem Kabinenboden eines Nutzfahrzeuges verbunden ist, federnd gelagert. Abgedeckt wird eine derartige Federung durch den hier dargestellten Faltenbalg.

Der Fahrzeugsitz kann sowohl in Höhenrichtung gemäß dem Doppelpfeil 10 als auch in Längsrichtung gemäß dem Doppelpfeil 9 und in Breitenrichtung gemäß dem Doppelpfeil 8 schwingend beziehungsweise federnd bewegt werden.

Verschiedene schematisch dargestellte Verstellzylinder beziehungsweise Verstellmotoren 12, 13, 14, 15 werden gemeinsam durch einen Hebel 16 zeitgleich betätigt und können hierdurch unterschiedliche Sitzeinstellfunktionen bewirken. Der Hebel 16, hier in zwei verschiedenen Positionen dargestellt, kann in einer unteren Position vorliegen, um - wie in Fig. 1 a gezeigt - den Zustand "Straße befahren" herbeizuführen. Oder das Schaltelement beziehungsweise der Hebel 16 ist in einer oberen Stellung, um den Zustand "Ackerboden befahren" gemäß Fig. 1b herbeizuführen.

Aus einer Gesamtbetrachtung der Fig. 1, 1 a und 1 b ergibt sich, dass der Fahrzeugsitz um eine sich im Wesentlichen vertikal erstreckenden Drehachse 18 mittels einer Drehbewegung 17 mit seinem Sitzteil 2 innerhalb des Oberteiles 5 bewegt werden kann. Dies kann deutlich der Fig. 1b entnommen werden. Hierfür ist unter anderem der Verstellzylinder 12 der schematischen Darstellung der Funktionsweise notwendig.

Sämtliche Verstellzylinder beziehungsweise Motoren 12, 13, 14 und 15 sind mittels Kabelverbindungen, in diesem Fall elektrische Kabelverbindungen 22, 23, 24 und 25 mit dem gemeinsamen Schaltelement 16 verbunden, so dass das Schaltelement 16 bei seiner Betätigung, wie es bei dem Übergang vom Befahren einer Straße gemäß Fig. 1 a zum Befahren eines Ackerbodens gemäß Fig. 1b geschieht, zeitgleich sämtliche Sitzeinstellfunktionen bewirkt.

Gemäß Fig. 1b, welche den Fahrzeugsitz in einem Zustand des Befahrens eines Ackerbodens zeigt, ist der Fahrzeugsitz also um die Dreheinrichtung drehbar. Zudem ist eine Horizontalfederung, wie sie durch den Verstellzylinder bzw. den Motor 13 bewirkt werden kann, nicht verriegelt, sondern entriegelt.

Zudem ist das obere Teil 4 gemäß dem Pfeil 11 nach hinten geklappt. Dies wird durch den Verstellzylinder beziehungsweise Motor 14 bewirkt.

Außerdem ist eine harte Federungseinstellung der Vertikaldämpfereinrichtung mittels des Verstellzylinders beziehungsweise Motors 15 eingestellt.

Sämtliche oben in Verbindung mit Fig. 1 genannten Sitzeinstellungsfunktionen werden durch das einmalige Betätigen des Schaltelementes 16 geändert, wenn beispielsweise der Fahrzustand des Nutzfahrzeuges sich von "Ackerboden befahren" in "Straße befahren" ändert. Dann würde die Dreheinrichtung verriegelt sein und zwar derart, dass der Fahrzeugsitz in Fahrzeugsitzlängsrichtung 9 ausgerichtet bleibt. Zudem würde dieser Seitenhorizontalfedereinrichtung in einer Mittellage verriegelt sein, so dass der Fahrzeugsitz nicht nach links oder rechts federn könnte. Zudem ist das obere Teil 4 der Rückenlehne aufgestellt um die Fahrsicherheit zu erhöhen. Hinzu kommt, dass die Vertikalfederung eine weiche Einstellung für das bequeme Fahren auf der Straße einnimmt.

Mit dem Bezugszeichen 19 wird ein Hebel zum Betätigen eines Vor- und Zurückverschiebens des Sitzteils 2 gegenüber dem Unterteil 6 mit dem Oberteil 5 dargestellt.

Das Schaltelement 20 dient zur Einstellung einer Längshorizontalfederung, die hier nicht näher beschrieben ist.

Das Schaltelement 21 ist ein Hebel, der mittels des Verstellzylinders 13 ausgelöst oder zurückbewegt wird, um die Seitenhorizontalverriegelung zu entriegeln oder zu verriegeln.

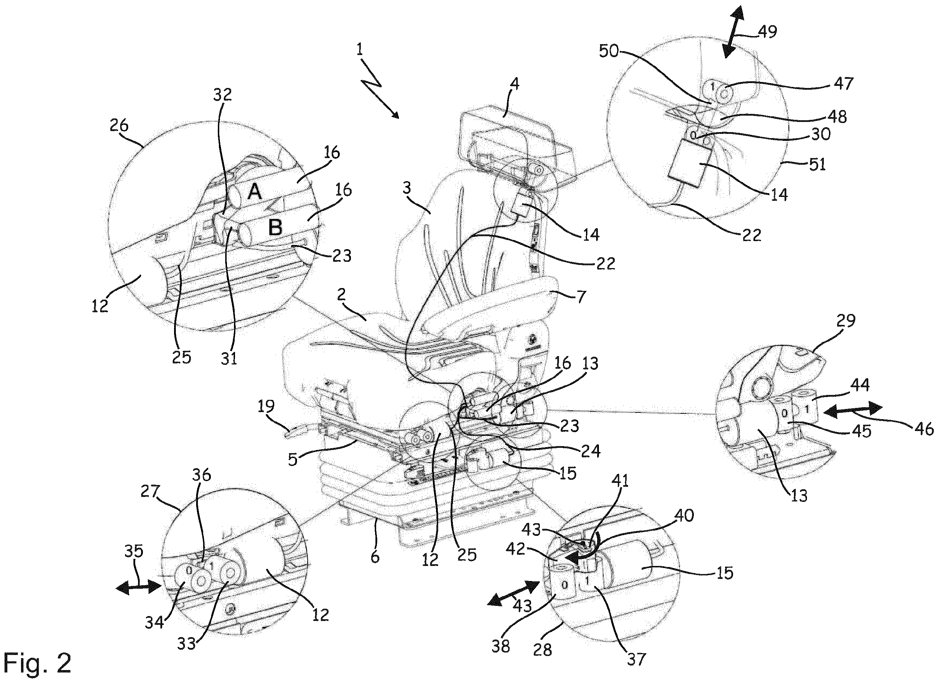

In Fig. 2 ist der in Fig. 1 dargestellte Fahrzeugsitz mit schematisch dargestellten Zuständen der einzelnen Sitzeinstelleinrichtungen wiedergegeben. Dieser Darstellung ist zu entnehmen, dass gemäß den fünf vergrößerten Ausschnittsdarstellungen 26, 27, 28, 29 und 30 verschiedene Zustände der Einrichtungen und auch des Schaltelementes 16 möglich sind.

Gemäß Bezugszeichen 26 sind in einer vergrößerten Darstellung zwei verschiedene Positionen des Schaltelementes 16 wiedergegeben. In einer Position A wird der Zustand "Ackerboden befahren" von den verschiedenen Sitzeinstelleinrichtungen eingenommen. Dies wird durch das Element 16 für sämtliche Sitzeinstelleinrichtungen bewirkt. In dem Zustand B nehmen die Sitzeinstelleinrichtungen den Zustand ein, der dafür notwendig ist, um den Zustand "Straße befahren" herbeizuführen.

Der Darstellung gemäß Bezugszeichen 26 ist auch zu entnehmen, dass die einzelnen Verbindungsleitungen 23, 25 zu dem Schaltelement 16 hinführen.

Gemäß der vergrößerten Ausschnittsdarstellung 27 sind zwei verschiedene Schaltzustände 34 und 33 des Verstellzylinders 12, der für die Dreheinrichtung und somit für eine Drehbewegung des Sitzteiles gegenüber dem Unterteil 6 zuständig ist, gezeigt. Der Verstellzylinder 12 kann einen Kolben gemäß dem Doppelpfeil 35 ein- und ausfahren und hierdurch einen verriegelten Zustand (Bezugszeichen 33), bei dem eine hier nicht näher dargestellten feste Verbindung zwischen dem Kolben beziehungsweise einem Teil 33 und einem mit der Dreheinrichtung verbundenen Bauelement 36 stattfindet, und einem entriegelten Zustand gemäß Bezugszeichen 34 einnehmen.

Gemäß Bezugszeichen 28 ist eine vergrößerte Darstellung der Vertikalfedereinrichtung in zwei verschiedenen Zuständen wiedergegeben. In einem verriegelten Zustand gemäß Bezugszeichen 37 ist ein Hebel 41 in einer ersten Position, in der eine harte oder weiche Federung vorliegt, in einer zweiten Position 42 des Hebels, wie es durch den Zustand 43 bewirkt wird, wobei der Verstellzylinder 15 einen Kolben gemäß Doppelpfeil 38 ein- und ausfahren kann, ist demzufolge die entgegengesetzte Federung in Vertikalrichtung, also hart oder weich, eingestellt. Hierfür führt der Hebel 41 eine Drehbewegung gemäß dem Pfeil 40 und die Achse 39 durch.

In der vergrößerten Ausschnittsdarstellung gemäß Bezugszeichen 29 sind zwei verschiedene Zustände der Horizontalfedereinrichtung gezeigt. In einem ersten Zustand 44 liegt ein verriegelter Zustand der Horizontalfedereinrichtung durch Auslenkung des hier nicht näher dargestellten Hebels 21 vor. Hierfür wird der Kolben gemäß dem Doppelpfeil 46 des Verstellzylinders 13 aus- oder eingefahren. In einem zweiten eingefahrenen Zustand des Kolbens liegt ein entriegelter Zustand der Horizontalfedereinrichtung vor.

In der vergrößerten Ausschnittsdarstellung gemäß Bezugszeichen 30 wird die Umklappeinrichtung für das obere Teil 4 der Rückenlehne, die auch als Kopfstütze ausgebildet sein kann, wiedergegeben. Dieser Darstellung ist zu entnehmen, dass der Verstellzylinder 14 mit einem ausgefahrenen Kolben 50 in einem ersten Zustand 47 entlang der Richtung 49 einen arretierten beziehungsweise verriegelten Zustand einnimmt und somit das obere Teil 4 aufgestellt in Richtung der Längsrichtung der Rückenlehne ausgerichtet ist. In einem zweiten Zustand 48 ist der Kolben 50 eingefahren und erlaubt dadurch ein Verschwenken des Teiles 51 und somit ein Nachhintenklappen des oberen Teiles 4.

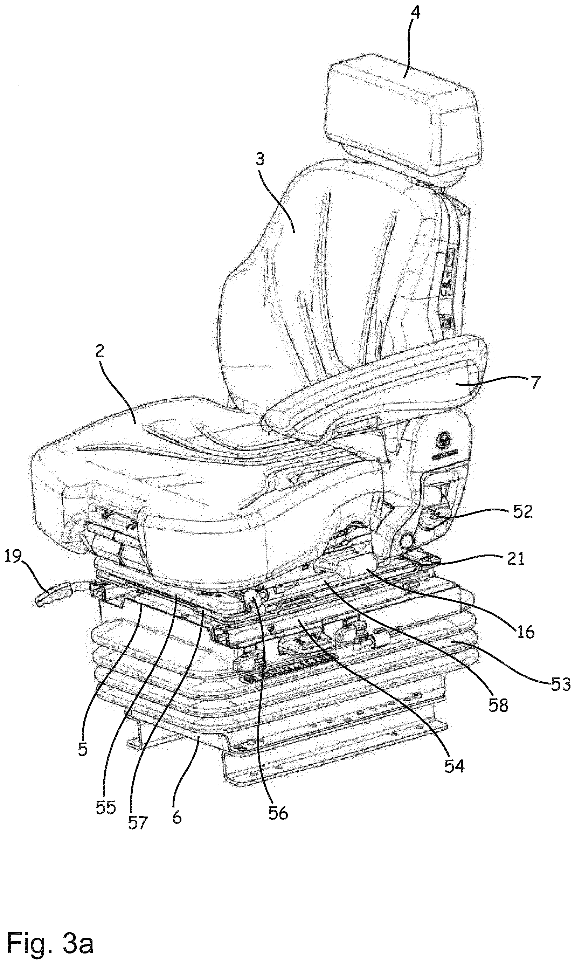

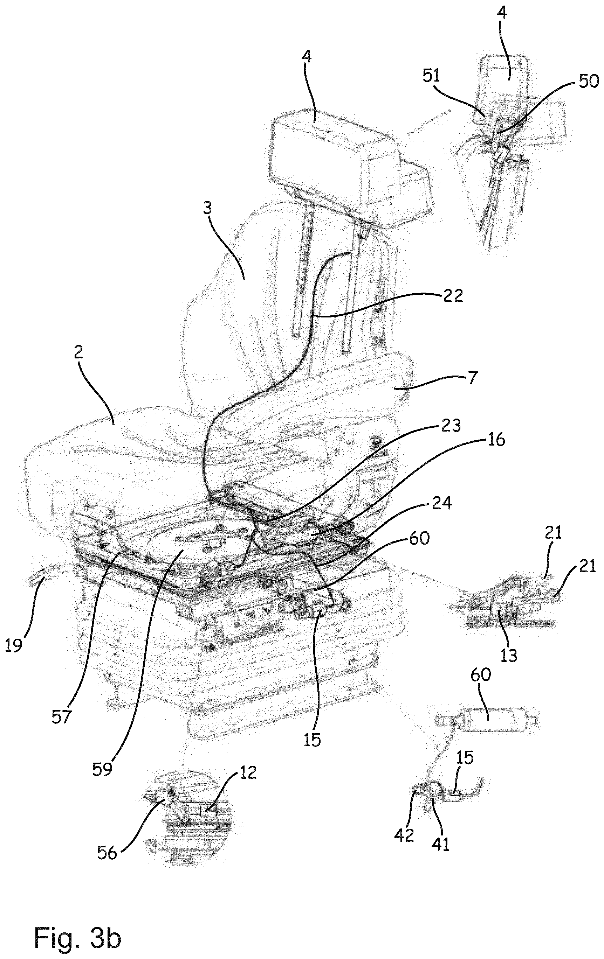

In Fig. 3a und 3b ist der Fahrzeugsitz gemäß der vorliegenden Erfindung mit einer detaillierten Darstellung mit verschiedenen Verstelleinrichtungen wiedergegeben. Die verschiedenen Sitzverstelleinrichtungen lassen sich insbesondere der Darstellung gemäß Fig. 3b entnehmen, welche eine teilweise aufgeschnittene Darstellung des Fahrzeugsitzes wiedergibt.

Bei näherer Betrachtung der in Fig. 3a und 3b wiedergegebenen Fahrzeugsitze kann erkannt werden, dass in Längsrichtung verlaufende Schienenelemente 54 dafür verwendet werden, um den Fahrzeugsitz beziehungsweise das Sitzteil 2 in Vorwärts- und Rückwärtsrichtung, also in Fahrzeuglängsrichtung 9, zu verschieben. Ebenso können in Fahrzeugbreitenrichtung verlaufende Schienenelemente 55 erkannt werden, die für ein seitliches Verschieben des Sitzteiles gegenüber dem restlichen Oberteil 5 und dem Unterteil 6 notwendig sind. Dies geht einher mit der Funktion der Horizontalfedereinrichtung in Fahrzeugsitzbreitenrichtung.

Der Faltenbalg 53 dient zum Abdecken von vielen Elementen, die zwischen Oberteil 5 und Unterteil 6 angeordnet sind.

Das Oberteil umfasst ein unteres plattenartiges Element 57 und ein oberes plattenartiges Element 58, die mittels eines sogenannten Drehadapters 59 miteinander verbunden sind und kugellagerbasierend zueinander verdreht werden können. Hierdurch kann das Sitzteil 2 und auch die Rückenlehne 3 bezüglich des Unterteils 6 aber auch der unteren Bauteile des Oberteils 5 verdreht werden.

Gemäß Bezugszeichen 52 ist mittels eines Hebels ein nach hinten und nach vorne Verschwenken der Rückenlehne 3 bezüglich des Sitzteiles 2 möglich.

Die Dreheinrichtung 57, 58 und 59 kann mittels eines Hebels 56 betätigt werden, der wiederum über einen Verstellzylinder 12 in eine verriegelte oder entriegelte Position gebracht werden kann. Bewirkt wird dies durch das gemeinsame Schaltelement 16. In Fig. 3b ist eine in einer vergrößerten Darstellung dieser Hebel 56 in 2 verschiedenen Positionen wiedergegeben.

Ebenso ist in Fig. 3b eine vergrößerte Darstellung eines Dämpferelementes 60 und des dazugehörigen Verstellzylinders 15 wiedergegeben, wobei der Verstellzylinder 15 dafür verwendet wird, um in das Hebelelement 41, 42 in 2 verschiedene Positionen zu bringen, so dass hierdurch eine unterschiedlich starke Federung (schwach - stark, weich - hart) innerhalb des Dämpferelementes für Vertikaldämpfung des Fahrzeugsitzes eingestellt werden kann. Auch diese Sitzeinstelleinrichtung wird durch das einmalige Betätigen des Schaltelementes 16 initiiert.

Zudem ist der Hebel 21 zum Entriegeln oder Verriegeln einer Seitenhorizontalfedereinrichtung da in vergrößerter Darstellung wiedergegeben. Dieser Hebel 21 wird durch den Verstellzylinder 13 in zwei verschiedene Positionen gebracht, wie es aus der vergrößerten Darstellung in Fig. 3b deutlich hervorgeht. Diese Funktion wird durch das Schaltelement 16 bewirkt.

Zudem kann die Umklappeinrichtung im oberen Teil der Rückenlehne mittels des hier schematisch dargestellten Umklappmechanismus gemäß dem Kolben 50 und dem Bauteil 51 arretiert oder nicht arretiert beziehungsweise verriegelt oder entriegelt werden.

### Bezugszeichenliste

- 1: Fahrzeugsitz
- 2: Sitzteil
- 3: Rückenlehne
- 4: Oberes Teil
- 5: Oberteil
- 6: Unterteil
- 7: Armlehne
- 8: Doppelpfeil
- 9: Doppelpfeil/Fahrzeuglängsrichtung
- 10: Doppelpfeil
- 11: Bewegungspfeil
- 12: Verstellzylinder/Motoren
- 13: Verstellzylinder/Motoren
- 14: Verstellzylinder/Motoren
- 15: Verstellzylinder/Motoren
- 16: Schaltelement/Hebel
- 17: Drehbewegung
- 18: Drehachse
- 19: Hebel
- 20: Schaltelement
- 21: Schaltelement
- 22: Hebel
- 23: Elektrische Kabelverbindung
- 24: Elektrische Kabelverbindung
- 25: Elektrische Kabelverbindung
- 26: Elektrische Kabelverbindung
- 27: Ausschnittsdarstellung
- 28: Ausschnittsdarstellung
- 29: Ausschnittsdarstellung
- 30: Ausschnittsdarstellung
- 31: Ausschnittsdarstellung
- 33: Verriegelter Zustand
- 34: Verriegelter Zustand
- 35: Doppelpfeil
- 36: Doppelpfeil
- 40: Pfeil
- 41: Hebelelement
- 42: Hebelelement
- 44: verriegelter Zustand
- 45: Erster Zustand
- 46: Doppelpfeil
- 47: Erster Zustand
- 49: Richtung
- 50: Kolben
- 51: Kolben
- 52: Bauteil
- 53: Faltenbalg
- 55: Schienenelement
- 57: Oberes plattenartiges Element
- 58: Unteres plattenartiges Element
- 59: Drehadapter
- 60: Dreheinrichtung

## Patentansprüche

1. Fahrzeugsitz, insbesondere für Nutzfahrzeuge, mit einem Sitzteil (2), einer Rückenlehne (3) und einem Unterteil (6), gegenüber welchem ein das Sitzteil (2) und die Rückenlehne (3) tragendes Oberteil (5) federnd gelagert ist, wobei das Sitzteil (2) gegenüber dem Oberteil (5) mittels einer Dreheinrichtung (12, 36, 46, 47, 48, 59) um eine sich in Fahrzeugsitzhöhenrichtung (10) erstreckende Drehachse (18) für eine Drehbewegung (17) drehbar gelagert ist und mittels einer Horizontalfedereinrichtung (13, 21) in mindestens eine senkrecht zur Drehachse (18) verlaufende Richtung (8, 9) vorzugsweise Fahrzeugsitzquerrichtung, für eine Horizontalfederbewegung (8) federnd gelagert ist,
**dadurch gekennzeichnet, dass**
mittels eines gemeinsamen Schaltelementes (16) sowohl die Dreheinrichtung (12, 36, 46, 47, 48, 59) als auch die Horizontalfedereinrichtung (13, 21) hinsichtlich der mit ihnen durchgeführten Bewegungen (17, 8) zeitgleich verriegelbar und entriegelbar ist.

2. Fahrzeugsitz nach Anspruch 1,
**dadurch gekennzeichnet, dass**
der Fahrzeugsitz (1) bei einem verriegelten Zustand (44,33) zu der Dreheinrichtung (12, 36, 46, 47, 48, 59) in Fahrtrichtung (9) ausgerichtet und bei einem verriegelten Zustand (44) der Horizontalfedereinrichtung (13, 21) bezüglich der Fahrzeugsitzbreitenvorrichtung (8) in einer Mittellage positioniert ist.

3. Fahrzeugsitz nach Anspruch 1 oder 2,
**dadurch gekennzeichnet, dass**
mittels des Schaltelementes (16) zusätzlich eine Umklappeinrichtung (14, 15, 51) für das Durchführen einer Umklappbewegung (11) eines oberen Teiles (4) der Rückenlehne (3) zeitgleich mit der Dreheinrichtung (12, 36, 46, 47, 48, 59) und der Horizontalfedereinrichtung (13, 21) verriegelbar oder entriegelbar ist.

4. Fahrzeugsitz nach Anspruch 3,
**dadurch gekennzeichnet, dass**
das obere Teil (4) der Rückenlehne (3) bei einem verriegelten Zustand (47) der Umklappeinrichtung (14, 50, 51) mit einer aufgerichteten Position in Längsrichtung (10) der Rückenlehne (3) ausgerichtet ist.

5. Fahrzeugsitz nach einem der vorangegangenen Ansprüche,
**dadurch gekennzeichnet, dass**
mittels des Schaltelementes (16) zusätzlich eine Vertikalfedereinrichtung (15, 41, 42, 60) für das Durchführen einer Vertikalfederbewegung (10) des Oberteils (5) gegenüber dem Unterteil (6) zeitgleich mit der Verriegelung/Entriegelung der Dreheinrichtung (12, 36, 46, 47, 48, 59) und der Horizontalfedereinrichtung (13, 21) umschaltbar ist.

6. Fahrzeugsitz nach Anspruch 5,
**dadurch gekennzeichnet, dass**
an der Vertikalfedereinrichtung (15, 41, 42, 60) in einem verriegelten Zustand (33) der Dreheinrichtung (12, 36, 46, 47, 48, 59) und der Horizontalfedereinrichtung (13, 21) in einem ersten Vertikalfederungszustand (37, 41) mit einer weichen Federung und bei einem entriegelten Zustand (34, 45) der Dreheinrichtung (12, 36, 46, 47, 48, 59) und der Horizontalfedereinrichtung (13, 21) in einem zweiten Vertikalfederungszustand (38, 42) mit einer harten Federung eingeschaltet ist.

7. Fahrzeugsitz nach einem der vorrangegangen Ansprüche,
**dadurch gekennzeichnet, dass**
mittels des Schaltelementes (16) zusätzlich eine Sitzteilseitenstützeinrichtung für das Durchführen einer Auf- und Abwärtsbewegung von am Sitzteil (2) seitlich angeordneten ersten Seitenstützelementen zeitgleich mit der Verriegelung/Entriegelung der Dreheinrichtung (12, 36, 46, 47, 48, 59) und der Horizontalfedereinrichtung (13, 2) verriegelbar oder entriegelbar ist.

8. Fahrzeugsitz nach Anspruch 7,
**dadurch gekennzeichnet, dass**
die Sitzteilseitenstützeinrichtung bei einem verriegelten Zustand (33, 44) der Dreheinrichtung (12, 36, 46, 47, 48, 59) und der Horizontalfedereinrichtung (13, 21, 61, 62, 63) in einem Zustand mit aufwärtsgerichteten oder abwärtsgerichteten ersten Seitenstützelementen und bei einem entriegelten Zustand (34, 45) der Dreheinrichtung (12, 36, 46, 47, 48, 59) und der Horizontalfedereinrichtung (13, 21) in einem Zustand mit abwärtsgerichteten oder aufwärtsgerichteten ersten Seitenstützelementen ist.

9. Fahrzeugsitz nach einem der vorrangegangenen Ansprüche,
**dadurch gekennzeichnet, dass**
mittels des Schaltelementes (16) zusätzlich eine Rückenlehnenseitenstützeinrichtung für das Durchführen einer Personenkörperanpassungsbewegung von an der Rückenlehne (3) seitlich angeordneten zweiten Seitenstützelementen zeitgleich mit der Verriegelung/Entriegelung der Dreheinrichtung (12, 36, 46, 47, 48, 59) und der Horizontalfedereinrichtung (13, 21) verriegelbar oder entriegelbar ist.

10. Fahrzeugsitz nach Anspruch 9,
**dadurch gekennzeichnet, dass**
die Rückenlehnenseitenstützeinrichtung bei einem verriegelten Zustand (33, 44) der Dreheinrichtung (12, 36, 46, 47, 48, 59) und der Horizontalfedereinrichtung (13, 21) in einem Zustand mit abwärtsgerichteten zweiten Seitenstützelementen und bei einem entriegelten Zustand (34, 45) der Dreheinrichtung (12, 36, 46, 47, 48, 59) und der Horizontalfedereinrichtung (13, 21) in einem Zustand mit aufwärtsgerichteten zweiten Seitenstützelementen ist.

11. Fahrzeugsitz nach einem der vorrangegangenen Ansprüche,
**dadurch gekennzeichnet, dass**
mittels einer Steuereinrichtung ab einer vorbestimmbaren Geschwindigkeit des Fahrzeuges eine Anzeigeeinrichtung ansteuerbar ist, mittels welcher ein Hinweis auf eine fällige Betätigung des Schaltelementes (16) anzeigbar ist.

## Claims

1. Vehicle seat, in particular for commercial vehicles, comprising a seat part (2), a backrest (3) and a lower part (6), relative to which an upper part (5) carrying the seat part (2) and the backrest (3) is spring-mounted, the seat part (2) being mounted relative to the upper part (5) by means of a rotary device (12, 36, 46, 47, 48, 59) so as to be rotatable about an axis of rotation (18) extending in the vehicle seat height direction (10) for a rotational movement (17) and being spring-mounted for a horizontal spring movement (8) by means of a horizontal spring device (13, 21) in at least one direction (8, 9) extending perpendicularly to the axis of rotation (18), preferably a direction transverse to the vehicle seat, **characterised in that** both the rotary device (12, 36, 46, 47, 48, 59) and the horizontal spring device (13, 21) can be locked and unlocked at the same time, with respect to the movements (17, 8) performed thereby, by means of a common switching element (16).

2. Vehicle seat according to claim 1,
**characterised in that**, in a locked state (44, 33) with respect to the rotary device (12, 36, 46, 47, 48, 59), the vehicle seat (1) is orientated in the direction of travel (9), and in a locked state (44) of the horizontal spring device (13, 21), said seat is in a central position with respect to the vehicle seat width direction (8).

3. Vehicle seat according to either claim 1 or claim 2,
**characterised in that** a folding down device (14, 15, 51) for carrying out a folding down movement (11) of an upper part (4) of the backrest (3) can additionally be locked or unlocked at the same time as the rotary device (12, 36, 46, 47, 48, 59) and the horizontal spring device (13, 21) by means of the switching element (16).

4. Vehicle seat according to claim 3,
**characterised in that**, in a locked state (47) of the folding down device (14, 50, 51), the upper part (4) of the backrest (3) is orientated so as to be in an upright position in the longitudinal direction (10) of the backrest (3).

5. Vehicle seat according to any of the preceding claims,
**characterised in that**, by means of the switching element (16), a vertical spring device (15, 41, 42, 60) for carrying out a vertical spring movement (10) of the upper part (5) in relation to the lower part (6) can additionally be switched at the same time as the rotary device (12, 36, 46, 47, 48, 59) and the horizontal spring device (13, 21) are locked/unlocked.

6. Vehicle seat according to claim 5,
**characterised in that**, in a locked state (33) of the rotary device (12, 36, 46, 47, 48, 59) and of the horizontal spring device (13, 21), a first vertical suspension state (37, 41) having a soft suspension is activated on the vertical spring device (15, 41, 42, 60) and, in an unlocked state (34, 45) of the rotary device (12, 36, 46, 47, 48, 59) and of the horizontal spring device (13, 21), a second vertical suspension state (38, 42) having a hard suspension is activated on said vertical spring device.

7. Vehicle seat according to any of the preceding claims,
**characterised in that**, by means of the switching element (16), a seat part lateral support device for carrying out an upwards and downwards movement of first lateral support elements which are arranged laterally on the seat part (2) can additionally be locked or unlocked at the same time as the rotary device (12, 36, 46, 47, 48, 59) and the horizontal spring device (13, 2) are locked/unlocked.

8. Vehicle seat according to claim 7,
**characterised in that**, in a locked state (33, 44) of the rotary device (12, 36, 46, 47, 48, 59) and of the horizontal spring device (13, 21, 61, 62, 63), the seat part lateral support device is in a state having upwardly oriented or downwardly oriented first lateral support elements, and in an unlocked state (34, 45) of the rotary device (12, 36, 46, 47, 48, 59) and of the horizontal spring device (13, 21) said seat part lateral support device is in a state having downwardly oriented or upwardly oriented first lateral support elements.

9. Vehicle seat according to any of the preceding claims,
**characterised in that**, by means of the switching element (16), a backrest lateral support device for carrying out a movement by second lateral support elements, which are arranged laterally on the backrest (3), for adjusting to a person's body can additionally be locked or unlocked at the same time as the rotary device (12, 36, 46, 47, 48, 59) and the horizontal spring device (13, 21) are locked/unlocked.

10. Vehicle seat according to claim 9,
**characterised in that**, in a locked state (33, 44) of the rotary device (12, 36, 46, 47, 48, 59) and of the horizontal spring device (13, 21), the backrest lateral support device is in a state having downwardly oriented second lateral support elements and, in an unlocked state (34, 45) of the rotary device (12, 36, 46, 47, 48, 59) and of the horizontal spring device (13, 21), said backrest lateral support device is in state having upwardly oriented second lateral support elements.

11. Vehicle seat according to any of the preceding claims,
**characterised in that** a display device, by means of which an alert that the switching element (16) is due to be actuated can be displayed, can be activated by means of a control device once a predeterminable speed of the vehicle has been reached.

## Revendications

1. Siège de véhicule, en particulier pour véhicules utilitaires, avec une partie d'assise (2), un dossier (3) et une partie inférieure (6), par rapport à laquelle une partie supérieure (5) portant la partie d'assise (2) et le dossier (3) est supportée de façon élastique, la partie d'assise (2) étant, au moyen d'un système de rotation (12, 36, 46, 47, 48, 59), supportée par rapport à la partie supérieure (5) de façon rotative pour un mouvement de rotation (17) autour d'un axe de rotation (18) s'étendant dans la direction de la hauteur du siège de véhicule (10), et étant supportée de façon élastique au moyen d'un système de ressort horizontal (13, 21) dans au moins une direction (8, 9) perpendiculaire à l'axe de rotation (18), de préférence dans une direction transversale du siège de véhicule, pour un mouvement de ressort horizontal (8),
**caractérisé en ce que**,
au moyen d'un élément de commande (16) commun, aussi bien le système de rotation (12, 36, 46, 47, 48, 59) que le système de ressort horizontal (13, 21) peuvent être simultanément verrouillés et déverrouillés en ce qui concerne les mouvements (17, 8) effectués avec eux.

2. Siège de véhicule selon la revendication 1,
**caractérisé en ce que**, pour un état verrouillé (44, 33) du système de rotation (12, 36, 46, 47, 48, 59), le siège de véhicule (1) est orienté dans le sens de la marche (9) et, pour un état verrouillé (44) du système de ressort horizontal (13, 21), il est positionné dans un position centrale en ce qui concerne le dispositif de largeur du siège de véhicule (8).

3. Siège de véhicule selon la revendication 1 ou 2,
**caractérisé en ce que**,
au moyen de l'élément de commande (16), un système de rabattement (14, 15, 51) pour la réalisation d'un mouvement de rabattement (11) d'une partie supérieure (4) du dossier (3) peut en plus être verrouillé ou déverrouillé en même temps que le système de rotation (12, 36, 46, 47, 48, 59) et le système de ressort horizontal (13, 21).

4. Siège de véhicule selon la revendication 3,
**caractérisé en ce que**,
pour un état verrouillé (47) du dispositif de rabattement (14, 50, 51), la partie supérieure (4) du dossier (3) est orientée avec une position redressée dans la direction longitudinale (10) du dossier (3).

5. Siège de véhicule selon l'une des revendications précédentes,
**caractérisé en ce que**,
au moyen de l'élément de commande (16), un système de ressort vertical (15, 41, 42, 60) pour la réalisation d'un mouvement de ressort vertical (10) de la partie supérieure (5) par rapport à la partie inférieure (6) peut également être commuté en même temps que le verrouillage/déverrouillage du système de rotation (12, 36, 46, 47, 48, 59) et du système de ressort horizontal (13, 21).

6. Siège de véhicule selon la revendication 5,
**caractérisé en ce que**,
dans un état verrouillé (33) du système de rotation (12, 36, 46, 47, 48, 59) et du système de ressort horizontal (13, 21) dans un premier état de suspension verticale (37, 41), une suspension douce est appliquée sur le système de ressort vertical (15, 41, 42, 60) et, pour un état déverrouillé (34, 35) du système de rotation (12, 36, 46, 47, 48, 59) et du système de ressort horizontal (13, 21), une suspension dure est appliquée dans un deuxième état de suspension verticale (38, 42).

7. Siège de véhicule selon l'une des revendications précédentes,
**caractérisé en ce que**,
au moyen de l'élément de commande (16), un système d'appui latéral de partie d'assise pour la réalisation d'un mouvement montant et descendant de premiers éléments d'appui latéraux disposés latéralement sur la partie d'assise (2) peut également être verrouillé ou déverrouillé en même temps que le verrouillage/déverrouillage du système de rotation (12, 36, 46, 47, 48, 59) et du système de ressort horizontal (13, 2).

8. Siège de véhicule selon la revendication 7,
**caractérisé en ce que**,
pour un état verrouillé (33, 44) du système de rotation (12, 36, 46, 47, 48, 59) et du système de ressort horizontal (13, 21, 61, 62, 63), le système d'appui latéral de partie d'assise est dans un état avec des premiers éléments d'appui latéraux dirigés vers le haut ou dirigés vers le bas et, pour un état déverrouillé (34, 45) du système de rotation (12, 36, 46, 47, 48, 59) et du système de ressort horizontal (13, 21), dans un état avec des premiers éléments d'appui latéraux dirigés vers le bas ou dirigés vers le haut.

9. Siège de véhicule selon l'une des revendications précédentes,
**caractérisé en ce que**,
au moyen de l'élément de commande (16), un système d'appui latéral de dossier pour la réalisation d'un mouvement d'adaptation au corps de la personne par des deuxièmes éléments d'appui latéral disposés latéralement sur le dossier (3) peut en plus être verrouillé ou déverrouillé en même temps que le verrouillage/déverrouillage du système de rotation (12, 36, 46, 47, 48, 59) et du système de ressort horizontal (13,21).

10. Siège de véhicule selon la revendication 9,
**caractérisé en ce que**,
pour un état verrouillé (33, 44) du système de rotation (12, 36, 46, 47, 48, 59) et du système de ressort horizontal (13, 21), le système d'appui latéral de dossier est dans un état avec des deuxièmes éléments d'appui latéraux dirigés vers le bas et, pour un état déverrouillé (34, 45) du système de rotation (12, 36, 46, 47, 48, 59) et du système de ressort horizontal (13, 21), dans un état avec des deuxièmes éléments d'appui latéraux dirigés vers le haut.

11. Siège de véhicule selon l'une des revendications précédentes,
**caractérisé en ce que**,
au moyen d'un système de commande, un système d'affichage peut être piloté à partir d'une vitesse du véhicule qui peut être déterminée, système d'affichage au moyen duquel une consigne d'actionnement de l'élément de commande (16) qui doit avoir lieu peut être affichée.
